# EUROPÄISCHE PATENTSCHRIFT

(11) **EP 1 903 223 B1**
(45) Veröffentlichungstag und Bekanntmachung des Hinweises auf die Patenterteilung: **02.11.2011**
(21) Anmeldenummer: 07116783.7
(22) Anmeldetag: 19.09.2007
(51) Int. Cl.: F16B 23/00, F16B 33/00, F16B 37/00, F16B 41/00

(54) **Mutter aus Kunststoff**
Plastic Nut
Ecrou plastique

(30) Priorität: 21.09.2006 DE 202006014695 U
(43) Veröffentlichungstag der Anmeldung: 26.03.2008
(73) Patentinhaber: Newfrey LLC, Newark, Delaware 19711 (US)
(72) Erfinder: Albach, Jens, 35410 Hungen (DE); Schließner, Lothar, 35440 Linden (DE)
(74) Vertreter: Haar, Lucas Heinz Jörn

(56) Entgegenhaltungen:
- DE-A1- 4 101 959
- DE-C1- 10 048 975

## Beschreibung

Die Erfindung betrifft eine Mutter aus Kunststoff mit einer zentralen Bohrung zur Aufnahme eines Gewindebolzens und mit einer einen Werkzeugeingriffsbereich bildenden Außenfläche, welche nach Art eines gleichseitigen geraden Prismas mehrere, insbesondere sechs, ebene Seitenflächen hat, wobei jeweils zwei Seitenflächen miteinander eine Längskante bilden.

Muttern der angegebenen Art sind aus DE 693 00 210 D2 und DE 100 48 975 C1 bekannt. Sie können mit einer glatten Bohrung, in die sich der Gewindebolzen eingräbt oder mit einer Bohrung mit vorgefertigtem Innengewinde versehen sein. Die Außenfläche der bekannten Muttern hat in der Regel die Form eines Sechskants. Es sind daneben aber auch achtkantige oder vierkantige Muttern gebräuchlich. Die zentrale Bohrung zur Aufnahme des Gewindebolzens kann durchgehend oder auch bei sogenannten Hutmuttern einseitig geschlossen sein.

Muttern der angegebenen Art werden vielfach in der Automobilindustrie eingesetzt. Das Aufschrauben der Muttern erfolgt hierbei vielfach mit motorgetriebenen Schraubgeräten, die mit einem Steckschlüssel, vielfach auch als Nuss bezeichnet, versehen sind, der einen an die Außenfläche der Mutter angepassten Hohlraum hat, in den die Mutter einsetzbar ist. Für Muttern mit sechskantiger Außenfläche sind Steckschlüssel mit sechskantiger oder zwölfkantiger Innenfläche üblich. Für das schnelle und mühelose Anbringen der Muttern mit Hilfe eines solchen Schraubgerätes ist es erforderlich, dass sich die Muttern leicht in den Steckschlüssel einsetzen lassen, dass sie andererseits aber kraftschlüssig in dem Steckschlüssel festgehalten werden, damit das Schraubgerät mit der im Steckschlüssel befindlichen Mutter in die jeweilige Anschraubposition bewegt werden kann, ohne dass die Mutter aus dem Steckschlüssel herausfällt, wenn dieser z.B. mit seiner Öffnung nach unten gehalten wird.

Der Erfindung liegt die Aufgabe zugrunde, eine Mutter der eingangs genannten Art derart weiterzubilden, dass sie nach dem Einsetzen in einen Steckschlüssel in diesem haftet und bei Bewegung des Steckschlüssels in eine beliebige Montageposition nicht aus diesem herausfallen kann. Die Mutter soll weiterhin leicht in den Steckschlüssel einsetzbar sein und die Trennung des Steckschlüssels von der Mutter soll nach dem Aufschrauben der Mutter leicht möglich sein.

Die Aufgabe wird erfindungsgemäß dadurch gelöst, dass zumindest im Bereich einer Seitenfläche an dem sich axial erstreckenden Rand der Seitenfläche ein nach außen vorspringendes Halteelement angeformt ist, welches ein Festklemmen der Mutter in einem auf den Werkzeugeingriffsbereich aufgesteckten Steckschlüssel bewirkt.

Die erfindungsgemäße Anordnung des Halteelements an einer Längskante lässt die Abstützflächen weitgehend unberührt, so dass die Kraftübertragung zwischen Steckschlüssel und Mutter beim Anziehen der Mutter nicht beeinträchtigt ist. Üblicherweise hat die Innenfläche des Steckschlüssels gegenüber der Außenfläche der Mutter ein geringes Übermaß, so dass der Steckschlüssel sich beim Anziehen der Mutter leicht gegenüber der Mutter verdrehen kann, wodurch an der dem Halteelement in Drehrichtung folgenden Seitenfläche ein kleiner Spalt entsteht, in dem das Haltelement angeordnet sein oder in den es verdrängt werden kann.

Das erfindungsgemäße Halteelement eignet sich sowohl für Steckschlüssel, deren Innenfläche die gleiche Anzahl Längskanten hat wie die Außenfläche der Mutter, als auch für solche, deren Innenfläche die doppelte Kantenanzahl hat und sich daher nur im kantennahen Bereich an den Seitenflächen der Mutter abstützt.

Eine vorteilhafte Ausgestaltung der Erfindung sieht vor, dass das Halteelement eine keilförmige Rippe ist, die sich zwischen Rändern benachbarter Seitenflächen in Längsrichtung erstreckt und deren Höhe mit zunehmender Entfernung vom Werkzeugaufsteckende der Mutter zunimmt.

In einer weiteren vorteilhaften Ausgestaltung der Erfindung kann vorgesehen sein, dass das Halteelement durch eine keilförmige Erhöhung wenigstens einer Seitenfläche gebildet ist, wobei die Erhöhung an einer Längskante am stärksten ausgeprägt ist und mit zunehmender Entfernung vom Werkzeugaufsteckende der Mutter zunimmt. Die Erhöhung kann sich weiterhin in Richtung der anderen Längskante der Seitenfläche erstrecken, wobei sie in Richtung der anderen Längskante kontinuierlich abnimmt und an oder vor der anderen Längskante endet. Die Gestaltung einer solchen Erhöhung erzeugt eine vergleichsweise große Kontaktfläche zwischen der Mutter und dem Steckschlüssel und bewirkt eine gute Haftung durch Reibung.

Nach einem weiteren Vorschlag der Erfindung kann vorgesehen sein, dass das Halteelement aus einer weichen Kunststoffkomponente besteht und an einem Ring ausgebildet ist, der den Werkzeugeingriffsbereich umgebend in die Außenfläche der Mutter eingelassen ist. Diese Ausgestaltung ermöglicht hohe Haltekräfte bei geringen Aufsteckkräften, ist aber aufwendiger in der Herstellung.

Die Erfindung wird nachfolgend anhand von Ausführungsbeispielen näher erläutert, die in der Zeichnung dargestellt sind. Es zeigen
- Figur 1: eine perspektivische Ansicht einer ersten Ausführungsform einer Mutter nach der Erfindung,
- Figur 2: eine weitere perspektivische Ansicht der Mutter gemäß Figur 1,
- Figur 3: eine Draufsicht der Mutter gemäß Figur 1,
- Figur 4: eine perspektivische Ansicht einer zweiten Ausführungsform einer Hutmutter nach der Erfindung,
- Figur 5: eine weitere perspektivische Ansicht der Hutmutter gemäß Figur 4 und
- Figur 6: eine Draufsicht der Hutmutter gemäß Figur 4.

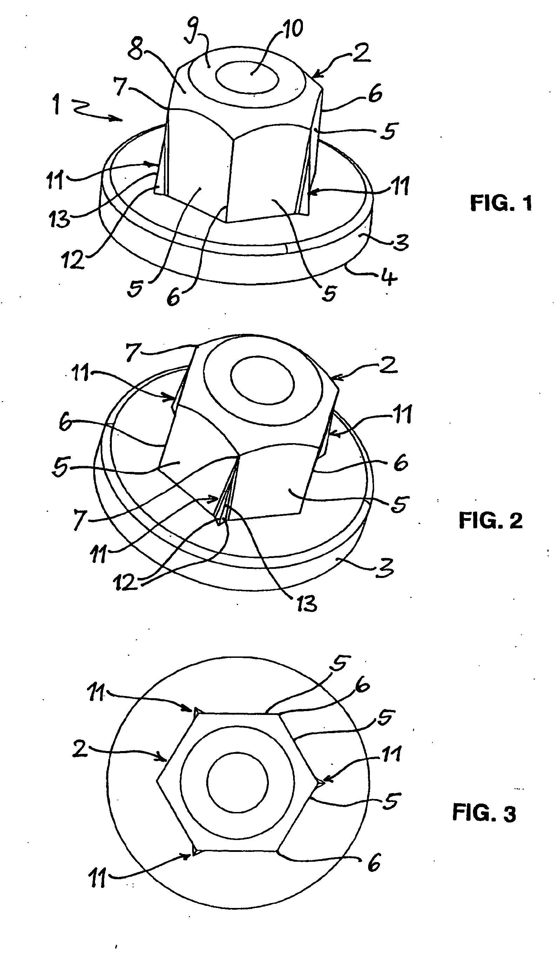

Bei der in den Figuren 1 bis 3 dargestellten Mutter 1 handelt es sich um eine sogenannte Bundmutter, die aus einem thermoplastischen oder duroplastischen Kunststoff hergestellt sein kann. Die Mutter weist einen nach Art eines sechskantigen Prismas ausgebildeten Kopf 2 und einen kreisscheibenförmigen Bund 3 auf, dessen dem Kopf 2 abgewandte Unterseite 4 eine Anlagefläche bildet. Der Kopf 2 hat sechs ebene Seitenflächen 5, die paarweise parallel angeordnet sind und miteinander Längskanten 6 und zwischen diesen Ecken 7 bilden. Die dem Bund 3 abgewandte Oberseite 8 des Kopfes 2 ist leicht gewölbt und weist in ihrer Mitte eine ebene Kreisfläche 9 auf. Im Zentrum der Kreisfläche 9 befindet sich eine die Mutter zentral durchdringende Bohrung 10, deren Innenwand glatt oder mit einem vorgefertigten Gewinde versehen sein kann.

Die Längskanten 6 sind durch die aneinander stoßenden Seitenflächen 5 gebildet und untereinander parallel. Sie befinden sich in einem Umfangsabstand von 120 °. An den zwischen den Längskanten 6 liegenden Ecken 7 sind keilförmige Rippen 11 ausgebildet. Die Rippen 11 erstrecken sich zwischen den angrenzenden Rändern benachbarter Seitenflächen 5 jeweils vom oberen Rand der Seitenflächen 5 nach unten bis zu dem Bund 3 und haben an dem Bund 3 ihre größte Höhe in radialer Richtung gemessen. Nach oben zur Oberseite 8 hin nimmt die Höhe der Rippen 11 stetig ab und erreicht im oberen Rand der Seitenflächen 5 den Wert 0. Zu den benachbarten Seitenflächen 5 sind die Rippen 11 durch Dreiecksflächen 12 begrenzt, die in einem Winkel von 60° bis 90 ° an Längskanten 13 aufeinander treffen. Die Rippen 11 bilden Halteelemente, die sich beim Einstecken der Mutter 1 in einen passenden Steckschlüssel in den Ecken des sechs- oder zwölfkantigen Hohlraums des Steckschlüssels verkeilen und dadurch ein kraftschlüssiges Festhalten der Mutter an dem Steckschlüssel bewirken. Die schlanke und in ihrer Höhe nur leicht wachsende Form der Rippen 11 ermöglicht das Erreichen der erforderlichen Haltekraft mit einer vergleichsweise geringen Kraft zum Eindrücken der Mutter in den Steckschlüssel. Die Rippen können sich elastisch und/oder plastisch verformen und ermöglichen dadurch bei Bedarf das Andrücken des Steckschlüssels bis an den Bund 3. Die Anordnung der Halteelemente an den zusammentreffenden seitlichen Rändern der Seitenflächen 5 hat weiterhin den Vorteil, dass die Halteelemente in sechs- und zwölfkantigen Steckschlüsseln gleichermaßen wirksam sind. Ein zu starkes Deformieren der Halteelemente beim Festschrauben und Anziehen der Mutter wird vermieden, so dass sich der Steckschlüssel von der festgeschraubten Mutter auch wieder leicht abziehen lässt.

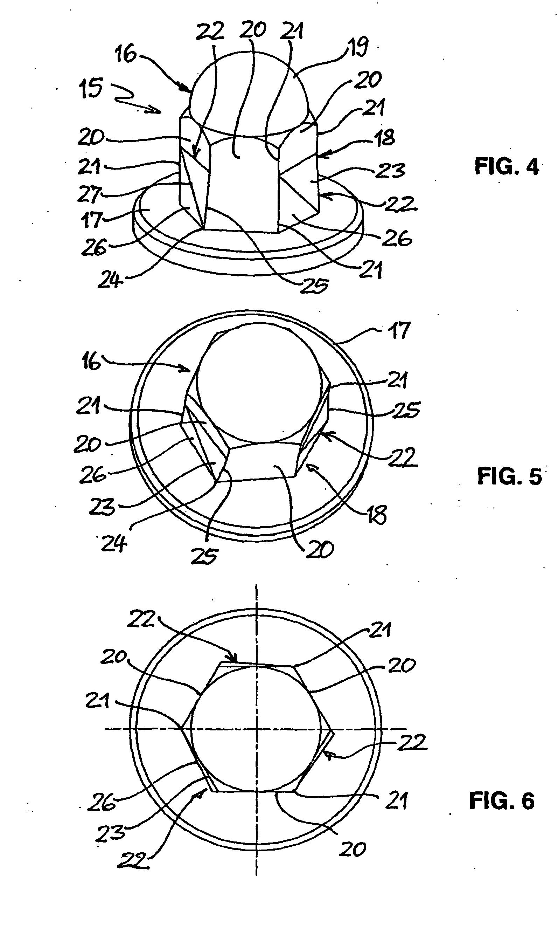

In den Figuren 4 bis 6 ist eine aus Kunststoff bestehende Mutter 15 in Form einer Hutmutter gezeigt. Die Mutter 15 hat einen Kopf 16 und einen kreisförmigen Bund 17. Der Werkzeugeingriffsbereich 18 des Kopfs 16 ist als Sechskant ausgeführt und trägt auf seiner dem Bund 17 abgekehrten Seite eine als Halbkugel ausgebildete Kappe 19.

Der Werkzeugeingriffsbereich 18 hat sechs Seitenflächen 20, die miteinander sechs parallele Längskanten 21 bilden. Jede zweite der Seitenflächen 20 ist in einem unteren an den Bund 17 angrenzenden Bereich mit einer keilförmigen Erhöhung 22 versehen. Die Erhöhung 22 ist durch eine erste Dreiecksfläche 23 begrenzt, deren eine Seite in einem parallelen Abstand von dem Bund 3 die Seitenfläche 20 quert. Die Dreiecksfläche 23 erstreckt sich zu einem Punkt 24 auf der Oberseite des Bunds 17, der in der Ebene der benachbarten Seitenfläche 20 und auf einem größeren Durchmesser als die Längskante 21 liegt. Die Seitenfläche 20 grenzt an die Dreiecksfläche 23 an und bildet mit dieser eine die Längskante 21 verlängernde Kante 25. Die Erhöhung 22 wird weiterhin von einer zweiten Dreiecksfläche 26 begrenzt, die eine auf der der Kante 25 gegenüberliegenden Längskante 21 liegende Seite hat und sich von dort zu dem Punkt 24 erstreckt. Beide Dreiecksflächen 23, 26 haben eine gemeinsame Seite 27, die sich quer über die Erhöhung 22 erstreckt und die Längskante 21 mit dem Punkt 24 verbindet.

Durch die beschriebenen Erhöhungen 22 sind keilförmige Halteelemente gebildet, die in einer Höhe von etwa zwei Dritteln der Höhe der Seitenflächen 20 beginnen und deren Höhe mit Annäherung an den Bund 17 kontinuierlich zunimmt, wobei die größte Höhe an der Kante 25 liegt, die sich bei Drehung der Mutter im Uhrzeigersinn am jeweils hinteren Rand der Erhöhungen 22 befindet. Durch diese Form der Halteelemente wird eine große Berührungslänge zwischen den Halteelementen und dem Steckschlüssel und dementsprechend eine vergleichsweise große Haltekraft zum Festhalten der Mutter in dem Steckschlüssel erzielt. Die großflächige Ausbildung der Halteelemente vermeidet zu starke Verformung und wirkt der Möglichkeit einer Verkeilung der Mutter im Steckschlüssel nach dem Anziehen entgegen. Hierbei ist auch wesentlich, dass die größte radiale Ausdehnung der Halteelemente sich jeweils in dem beim Festziehen weniger belasteten Bereich der Seitenflächen befindet und daher kaum nennenswerten Verformungskräften ausgesetzt ist.

## Patentansprüche

1. Mutter (1, 15) aus Kunststoff mit einer zentralen Bohrung (10) zur Aufnahme eines Gewindebolzens und mit einer einen Werkzeugeingriffsbereich (18) bildenden Außenfläche, welche nach Art eines gleichseitigen geraden Prismas mehrere, insbesondere sechs, ebene Seitenflächen (5, 20) hat, wobei jeweils zwei Seitenflächen (5, 20) miteinander eine Längskante (6, 21) bilden, **dadurch gekennzeichnet, dass** zumindest im Bereich einer Seitenfläche (5) an dem sich axial erstreckenden Rand der Seitenfläche (5, 20) ein nach außen vorspringendes Halteelement (11; 22) angeformt ist, welches ein Festklemmen der Mutter (1, 15) in einem auf den Werkzeugeingriffsbereich (18) aufgesteckten Steckschlüssel bewirkt.

2. Mutter nach Anspruch 1, **dadurch gekennzeichnet, dass** das Halteelement eine keilförmige Rippe (11) ist, die sich zwischen Rändern benachbarter Seitenflächen (5) in Längsrichtung erstreckt und deren Höhe mit zunehmender Entfernung vom Werkzeugaufsteckende der Mutter (1) zunimmt.

3. Mutter nach Anspruch 1 **dadurch gekennzeichnet, dass** das Halteelement durch eine keilförmige Erhöhung (22) wenigstens einer Seitenfläche (20) gebildet ist, wobei die Erhöhung (22) an einer Längskante (21) am stärksten ausgeprägt ist und ihre Höhe mit zunehmender Entfernung vom Werkzeugaufsteckende der Mutter (15) zunimmt.

4. Mutter nach dem vorhergehenden Anspruch, **dadurch gekennzeichnet, dass** die Erhöhung (22) sich in Richtung der anderen Längskante (21) der Seitenfläche (20) erstreckt, wobei sie an oder vor der anderen Längskante (21) endet und ihre Höhe in Richtung der anderen Längskante (21) kontinuierlich abnimmt.

5. Mutter nach einem der Ansprüche 3 oder 4, **dadurch gekennzeichnet, dass** die Erhöhung (22) ihre größte Höhe an einer Kante (25) hat, die sich bei Drehung der Mutter (15) im Uhrzeigersinn am jeweils hinteren Rand der Erhöhung (22) befindet.

6. Mutter nach einem der vorhergehenden Ansprüche, **dadurch gekennzeichnet, dass** das Halteelement aus einer weichen Kunststoffkomponente besteht und an einem Ring ausgebildet ist, der den Werkzeugeingriffsbereich umgebend in die Außenfläche der Mutter eingelassen ist.

## Claims

1. Nut (1, 15) made of plastic with a central bore (10) for accommodating a threaded stud and with an outer surface forming a tool engagement region (18), which has multiple, in particular six, flat lateral faces (5, 20) in the manner of an equilateral right prism, each pair of lateral faces (5, 20) together forming a longitudinal edge (6, 21), **characterized in that** in the area of at least one lateral face (5) an outwardly projecting retaining element (11, 22) is molded onto the axially extending edge of the lateral face (5, 20), with said retaining element (11, 22) clamping the nut (1, 15) in place in a socket wrench placed on the tool engagement region (18).

2. Nut according to claim 1, **characterized in that** the retaining element is a wedge-shaped rib (11) that extends in the longitudinal direction between the edges of adjacent lateral faces (5) and whose height increases with increasing distance from the tool placement end of the nut (1).

3. Nut according to claim 1, **characterized in that** the retaining element is formed by a wedge-shaped elevation (22) of at least one lateral face (20), wherein the elevation (22) is most pronounced at a longitudinal edge (21), and its height increases with increasing distance from the tool placement end of the nut (15).

4. Nut according to the preceding claim, **characterized in that** the elevation (22) extends toward the other longitudinal edge (21) of the lateral face (20), ending at or before the other longitudinal edge (21) and its height decreasing continuously toward the other longitudinal edge (21).

5. Nut according to one of claims 3 or 4, **characterized in that** the elevation (22) has its greatest height at an edge (25) located at the rear boundary of the elevation (22) when the nut (15) is rotated clockwise.

6. Nut according to one of the preceding claims, **characterized in that** the retaining element consists of a soft plastic component and is formed on a ring that is let into the outer surface of the nut surrounding the tool engagement region.

## Revendications

1. Écrou (1, 15) en matériau synthétique avec un perçage central (10) pour recevoir une tige filetée et avec une surface externe formant une zone d'engagement d'outil (18) qui présente, sous la forme d'un prisme droit équilatéral, plusieurs, en particulier six surfaces latérales planes (5. 20), dans lequel, pour chaque paire de surfaces latérales (5, 20), celles-ci forment ensemble une arête longitudinale (6, 21), **caractérisé en ce qu'**au moins au niveau d'une surface latérale (5), sur le bord de la surface latérale (5, 20) s'étendant axialement, un élément de retenue (11 ; 22) faisant saillie vers l'extérieur est moulé, ledit élément provoquant un blocage de l'écrou (1, 15) dans une clé enfichable enfilée sur la zone d'engagement d'outil (18).

2. Ecrou selon la revendication 1, **caractérisé en ce que** l'élément de retenue est une nervure cunéiforme (11) qui s'étend entre des bords de surfaces latérales adjacentes (5) dans la direction longitudinale et dont la hauteur croît avec l'êloignement croissant à l'extrémité d'enfilage d'outil de l'écrou (1).

3. Ecrou selon la revendication 1, **caractérisé en ce que** l'élément de retenue est formé par une surélévation cunéiforme (22) d'au moins une surface latérale (20), dans lequel la surélévation (22) est marquée le plus fortement sur une arête longitudinale (21) et sa hauteur croît avec l'éloignement croissant à l'extrémité d'enfilage d'outil de l'écrou (15).

4. Ecrou selon la revendication précédente, **caractérisé en ce que** la surélévation (22) s'étend en direction de l'autre arête longitudinale (21) de la surface latérale (20), dans lequel elle se termine sur ou avant l'autre arête longitudinale (21) et sa hauteur diminue en continu en direction de l'autre arête longitudinale (21).

5. Ecrou selon l'une quelconque des revendications 3 ou 4, **caractérisé en ce que** la surélévation (22) a sa plus grande hauteur sur une arête (25) qui se trouve, lors de la rotation de l'écrou (15) dans le sens des aiguilles d'une montre, sur le bord arriëre de la surélévation (22) respective.

6. Ecrou selon l'une quelconque des revendications précédentes, **caractérisé en ce que** l'élément de retenue est constitué d'un composant en matériau synthétique souple et est formé sur un anneau qui, en entourant la zone d'engagement d'outil, est encastré dans la surface externe de l'écrou.
